# EUROPÄISCHE PATENTSCHRIFT

(11) **EP 0 995 353 B1**
(45) Veröffentlichungstag und Bekanntmachung des Hinweises auf die Patenterteilung: **22.09.2004**
(21) Anmeldenummer: 99120772.1
(22) Anmeldetag: 20.10.1999
(51) Int. Cl.: A01F 25/14

(54) **Verpackung für Siloballen**
Packing for bales of silage
Emballage pour balles d'ensilage

(30) Priorität: 21.10.1998 DE 19848580
(43) Veröffentlichungstag der Anmeldung: 26.04.2000
(73) Patentinhaber: Kaspar, Karl, 86565 Gachenbach (DE); Soller GmbH, 85290 Geisenfeld (DE)
(72) Erfinder: Kaspar, Karl, 86565 Gachenbach (DE); Soller, Harald, 85290 Geisenfeld (DE); Soller, Anton, 84048 Wolfertshausen (DE)
(74) Vertreter: Richter, Thomas, Dr.rer.nat.

(56) Entgegenhaltungen:
- EP-A- 0 789 991
- CH-A- 432 924
- DE-A- 3 427 731
- DE-U- 29 612 326

## Beschreibung

Die Erfindung bezieht sich auf eine Verpackung für geschnittene oder gehäckselte landwirtschaftliche Erzeugnisse und/oder Futtermittel enthaltende Ballen, insbesondere für Siloballen, welche den jeweiligen formgepressten Ballen wasser- und luftdicht umgibt und als Mehrwegverpackung ausgebildet ist, wobei die Verpackung aus einer über den jeweiligen Ballen stülpbaren Haube und einer den jeweiligen Ballen tragenden Bodenplatte besteht und die Haube abdichtend mit der Bodenplatte wasserund luftdicht verbindbar und wieder lösbar ist, wobei die Haube nach Art eines flexiblen Sackes ausgebildet ist, dessen Öffnungsbereich mit der für die abdichtende Verbindung entsprechend hergerichteten Bodenplatte verbindbar ist.

In der jüngeren Vergangenheit ist man, aus welchen Gründen auch immer, von den Großsilos abgerückt und auf das Silieren in Ballen übergegangen. Eine solche Verpackung für Siloballen entsteht durch Umhüllen des formgepressten Ballens mit einem Folienmaterial. Vor dem Umhüllen wird die erzielte Pressform mit Schnüren oder Netzen stabilisiert, so dass der Ballen nicht mehr auseinanderfallen und tatsächlich mit Folie wasser- und luftdicht umhüllt werden kann. Da das zu silosierende Ernte- oder Futtergut nach dem Fixieren die gepresste Form zwangsweise beibehält, kann das Umhüllen sowohl am Entstehungsort der Ballen als auch anderenorts vorgenommen werden. Dazu sind allerdings kostspielige Umhüllungsmaschinen erforderlich, die für den Einzelnen meistens nicht zur Verfügung stehen bzw. untragbar sind, so dass auf Lohnbetrieb mit erheblichen Lohnkosten zurückgegriffen werden muss.

Es mag zwar sein, dass man mit der Ballen-Silage gegenüber den Großsilagen wirtschaftliche, insbesondere Portionierungsvorteile erzielt, jedoch steht diesen Vorteilen ein nicht hinnehmbarer Nachteil gegenüber, der in der großen Menge an verbrauchter Folie zu sehen ist, die entsorgt werden muss, was nicht nur kostspielig, sondern auch umweltunfreundlich ist. Ebenso ist ein Recycling undenkbar, da die gebrauchten Folien stark verunreinigt sind und eine Reinigung untragbar erscheint. Ein weiterer Nachteil der bekannten Verpackung besteht darin, dass die verhältnismäßig dünnen und wenig festen Wickel bzw. Umhüllungsfolien von Vögeln (Krähen) angepickt, von Nagetieren angefressen oder von Tieren mit Krallen, z. B. von Katzen beschädigt werden. Beim Umhüllen der Ballen an ihrem Entstehungsort kann es auch vorkommen, dass beim Transport vom Entstehungsort zum Lagerplatz bzw. zum Verbraucher die Folienumhüllung beschädigt wird. Eine Beschädigung, ganz gleich wo und wann sie entstanden ist, führt dazu, dass Außenluft an das Füllgut gelangt, wodurch große Mengen an verdorbener Silage anfallen.

Aus der EP 0 789 991 A1 ist eine Verpackung der eingangs erwähnten Art bekannt.

Demgegenüber ist die Aufgabe der vorliegenden Erfindung darin zu sehen, eine Verpackung anzugeben, die mit einem verhältnismäßig geringen Aufwand herstellbar ist und mehrfach verwendet werden kann und trotzdem allen Belastungen von außen gewachsen ist sowie die Ballen vor Wasser und schädlicher Außenluft sicher schützt.

Gelöst wird diese Aufgabe mit den Merkmalen des Anspruches 1, indem der Hauben-Sack doppellagig ausgebildet ist, bei dem die innere Lage aus einer dünnen lebensmittelfreundlichen Folie besteht, während die äußere Lage von einer armierten festen Folie gebildet ist. Eine derart ausgebildete Verpackung wird allen Ansprüchen an Festigkeit, Sicherheit und Lebensmittelfreundlichkeit gerecht.

Die erfindungsgemäße Verpackung ist nicht auf Grünfutter-Siloballen beschränkt, sondern für alle Pressballen verwendbar, die geschnittene oder gehäckselte landwirtschaftliche Erzeugnisse und/oder Futtermittel enthalten, ganz gleich, ob sie silierfähig sind oder nicht oder nur der Haltbarkeit wegen vor Wasser und schädlicher Lufteinwirkung geschützt werden sollen.

Dabei ist es zweckmäßig, die beiden Lagen gemäß Anspruch 2 miteinander zu verbinden. Dabei ist vor allem daran gedacht, die innere Lage durch Punktklebung mit der äußeren Lage zu verbinden, da dann gewährleistet ist, dass auch dann die Wasser- und Luftundurchlässigkeit gegeben ist wenn die äußere, von einer armierten festen Folie gebildete Lage mit Hilfe von Nähten in die Sack-Form gebracht wurde. Ein Vemähen der beiden Lagen wäre dann möglich, wenn man die Nähte mit flüssigem, elastisch aushärtenden Kunststoff abdichten würde.

Für das abdichtende Verbinden des Hauben-Sackes mit der Bodenplatte ist es von Vorteil, wenn man nach den Lehren der Ansprüche 3, 4 und 5 vorgeht. Eine Weichdichtung ist deshalb empfehlenswert, weil sie auch dann zu einer ausreichenden Abdichtung führt, wenn der Hauben-Sack im Öffnungsbereich Falten schlägt, die ausgeglichen werden müssen. Als Dichtung ist auch ein auf die Ringfläche aufgezogener O-Ring denkbar. An bekannten Ringspannem bieten sich z. B. Gurte an, die mit einem Totpunktverschluss versehen sind. Ebenso könnten Gummiringe oder längenveränderbare Gummibänder zum Einsatz kommen.

Um zu vermeiden, dass z. B. beim Transport der Ballen auftretende Lageveränderungen der Ballen den Haubensack zu stark belasten, ist nach Anspruch 6 eine Zentrierung vorgesehen. Eine besondere Zentrierung ergibt sich aus Anspruch 7, die sich besonders dann anbietet, wenn man einen zylindrischen Ballen liegend verpacken will.

Im Hinblick darauf, dass insbesondere feuchte Pressballen ein erhebliches Gewicht haben, ist es von Vorteil, wenn man sich die Lehre des Anspruches 8 zu Nutze macht, da Paletten mit entsprechenden Geräten leicht transportiert werden können. Paletten sind bekanntlich mit Gabelstaplem oder mit Frontladem, die Zinken aufweisen, unterfahrbar, wodurch sich Vorteile für den Transport der verpackten Siloballen ergeben.

Für den Fall, dass die Bodenplatte nicht als Palette ausgebildet ist und trotzdem die Verpackung mit bekannten Hebegeräten transportiert und/oder auf- bzw. abgeladen oder gestapelt oder vom Stapel abgehoben werden soll, ist es zweckmäßig, nach Anspruch 9 vorzugehen.

In der Zeichnung ist ein Ausführungsbeispiel der Erfindung dargestellt. Es zeigen:
- Fig. 1: eine schaubildliche Darstellung einer flexiblen rechteckigen Haube mit Bodenplatte und
- Fig. 2: teilweise geschnitten und aufgebrochen eine rechteckige Bodenplatte, die einen zylindrischen Pressballen liegend aufnimmt und bei der die dichtende Verbindung der flexiblen rechteckigen Haube mit der rechteckigen Grundplatte zeichnerisch besonders deutlich dargestellt ist.

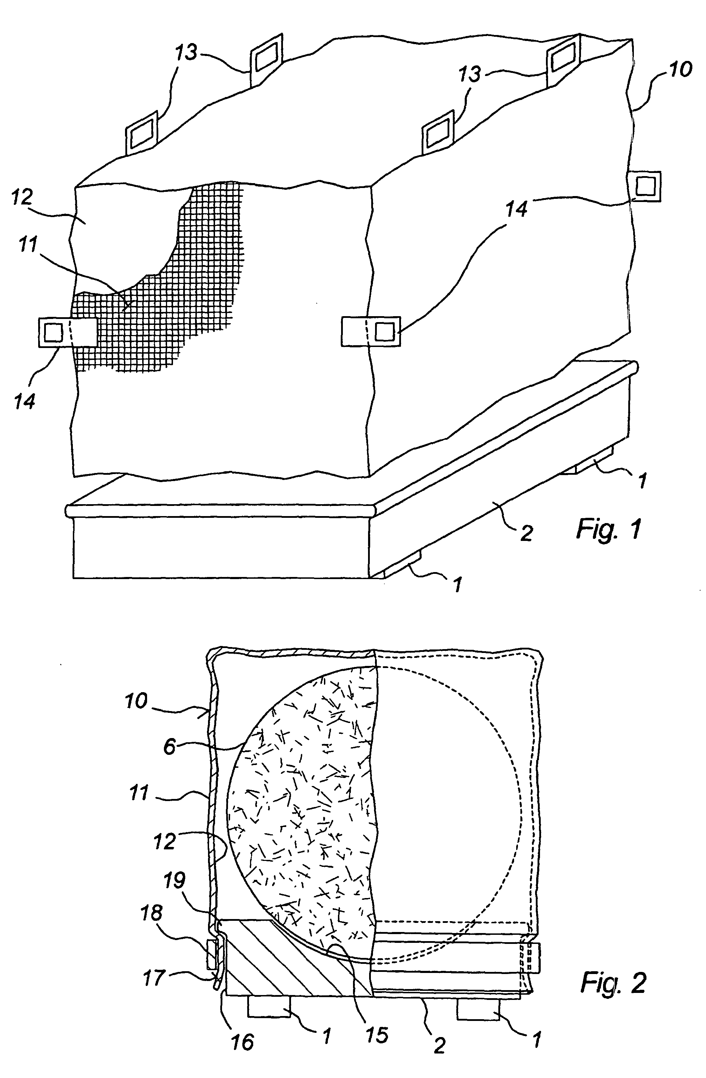

Die Fig. 1 lässt eine flexible rechteckige Haube 10 erkennen, die zwar sackartig ausgebildet, jedoch nach unten offen ist, um sie über die jeweilige Ballenform stülpen zu können. Es empfiehlt sich, die Hauben-Säcke 10 den Ballenformen in etwa anzupassen, um nicht unnötig Material zu verbrauchen oder die Abdichtung zu erschweren. Die Hauben-Säcke 10 sind, ganz gleich ob sie entsprechend der Form der Bodenplatte 2 mit Füßen 1 eine runde, quadratische oder rechteckige Form haben, doppellagig hergestellt, d.h., sie weisen eine z. B. gewebearmierte (vgl. die Kreuzschraffur) äußere, sehr feste und strapazierfähige Lage 11 und eine dünne innere Lage 12 auf, die aus einem lebensmittelfreundlichen Kunststoff besteht, damit die Ballen 6 nicht mit Schadstoffen angereichert werden können. Die beiden Lagen 11, 12 sind z. B. durch Punktverklebungen so miteinander verbunden, dass sie gewissermaßen eine Einheit bilden und das Überstülpen auf den jeweiligen Ballen nicht erschweren. Die Herstellung des Hauben-Sackes 10 erfolgt in der Weise, dass die innere Lage 12 auf keinen Fall durch Nähte luftdurchlässig wird. Wenn genäht wird oder werden muss, sind die Nähte abzudichten. Auf jeden Fall sind die erfindungsgemäßen Hauben 10 raumsparend zu lagern. Auf die abdichtende Verbindung der flexiblen Haube 10 mit der Grundplatte 2 wird in Fig. 2 eingegangen.

Die aus Fig. 1 ersichtlichen oberen und seitlichen Ösen bzw. Schlaufen 13, 14 dienen der Erleichterung der Handhabung, insbesondere des Transportes. Da z. B. die seitlichen Schlaufen 14 mit den festen äußeren Lagen 11 verbunden sind, können sie notfalls auch - wenn die Verbindung zwischen Bodenplatte 2 und Haube 10 dieser Beanspruchung gewachsen ist - für das Auf- oder Abladen der gefüllten Verpackung verwendet werden, da die Schlaufen 14 zusammen mit den Lagen 11 gewissermaßen Gurtbänder bilden. Die oberen Schlaufen 13 dienen in der Hauptsache dem Abnehmen oder Anheben der Haube 10 vom jeweiligen Ballen.

Gemäß der Fig. 2 ist die als Palette mit Füßen 1 ausgebildete Bodenplatte 2 mit einer Mulde 15 ausgestattet, in die ein zylindrischer Ballen 6 eingelegt ist. Die Mulde 15 kann axiale Begrenzungen aufweisen, die nicht zwingend sind. Für die wasser- und luftdichte Verbindung, die lös- und wiederverbindbar ist, weist die Bodenplatte 2 eine umlaufende Ringfläche 16 ohne scharfe Kanten auf, an die der Öffnungsbereich 17 der flexiblen Hauben 10 anpressbar ist, und zwar mit Hilfe eines Ringspanners 18. Ringspanner sind seit langem bekannt und sie haben sich auf allen Gebieten der Technik bestens bewährt. Hier bieten sich insbesondere solche Spanner an, die mit den sogenannten Totpunktverschlüssen ausgestattet sind. Zur Verbesserung der Dichtwirkung ist es denkbar, zwischen der Ringfläche 16 und der Lage 12 eine Weichdichtung vorzusehen, die z. B. von einem in die Ringfläche 16 eingelassenen O-Ring gebildet sein könnte.

Zur Verbesserung der Dichtwirkung ist beim Ausführungsbeispiel die Grundplatte 2 mit einer umlaufenden Wulst 19 ausgestattet, an die sich die wasser- und luftdichte Lage 12 der Haube 10 abdichtend anschmiegt.

## Patentansprüche

1. Verpackung für geschnittene oder gehäckselte landwirtschaftliche Erzeugnisse und/oder Futtermittel enthaltende Ballen, insbesondere für Siloballen, welche den jeweiligen formgepressten Ballen wasser- und luftdicht umgibt und als Mehrwegverpackung ausgebildet ist, wobei die Verpackung aus einer über den jeweiligen Ballen stülpbaren Haube und einer den jeweiligen Ballen tragenden Bodenplatte besteht und die Haube abdichtend mit der Bodenplatte wasser- und luftdicht verbindbar und wieder lösbar ist, wobei die Haube nach Art eines flexiblen Sackes ausgebildet ist, dessen Öffnungsbereich mit der für die abdichtende Verbindung entsprechend hergerichteten Bodenplatte verbindbar ist,
**dadurch gekennzeichnet,**
**dass** der Hauben-Sack (vgl. 10) doppellagig ausgebildet ist, bei dem die innere Lage (12) aus einer dünnen lebensmittelfreundlichen Folie besteht, während die äußere Lage (11) von einer armierten festen Folie gebildet ist.

2. Verpackung nach Anspruch 1, **dadurch gekennzeichnet, dass** die beiden Lagen (11, 12) des Hauben-Sackes (vgl. 10) derart miteinander verbunden sind, dass zumindest die innere Lage (12) wasser- und luftundurchlässig ist.

3. Verpackung nach Anspruch 1 oder 2, **dadurch gekennzeichnet, dass** für die abdichtende Verbindung der Haube (10) mit der Bodenplatte (2) letztere im hochgezogenen Randbereich eine umlaufende Ringfläche (16) aufweist, an die der Öffnungsbereich (17) des Hauben-Sackes (vgl. 10) abdichtend anpressbar ist (vgl. 18).

4. Verpackung nach Anspruch 3, **dadurch gekennzeichnet, dass** die Ringfläche (16) mit einer Weichdichtung ausgestattet ist.

5. Verpackung nach Anspruch 3 oder 4, **dadurch gekennzeichnet, dass** für das abdichtende Anpressen des Öffnungsbereiches (17) des Hauben-Sackes (vgl. 10) Ringspanner (18) bekannter Art vorgesehen sind.

6. Verpackung nach mindestens einem der vorhergehenden Ansprüche, **dadurch gekennzeichnet, dass** die Bodenplatte (2) eine Zentrierung (15) für den jeweiligen Pressballen (6) aufweist.

7. Verpackung nach mindestens einem der vorhergehenden Ansprüche, **dadurch gekennzeichnet, dass** die Zentrierung (15) für den jeweiligen Pressballen (6) von einer Mulde in der Bodenplatte (2) gebildet ist.

8. Verpackung nach mindestens einem der vorhergehenden Ansprüche, **dadurch gekennzeichnet, dass** die Bodenplatte (2) nach Art einer Palette mit Füßen (1) ausgebildet ist.

9. Verpackung nach mindestens einem der vorhergehenden Ansprüche, **dadurch gekennzeichnet, dass** der flexible Hauben-Sack (vgl. 10) an seiner armierten festen Folie (11) obere und/oder seitliche Schlaufen (13, 14) od. dgl. aufweist.

## Claims

1. Packaging for bales containing cut or chopped agricultural products and/or foodstuffs, particularly for silo bales, which watertightly and hermetically enclose the respective bale pressed into shape and which is constructed as a multi-use packaging, wherein the packaging consists of a hood placeable over the respective bale and a base plate supporting the respective bale and the hood is watertightly and hermetically sealably connectible with the base plate and detachable again, wherein the hood is constructed in the manner of a flexible bag, the opening region of which is connected with the base plate, which is appropriately readied for the sealing connection, **characterised in that** the hood bag (cf 10) is constructed to be double-layered, in which the inner layer (12) consists of a thin film compatible with foodstuffs, whereas the outer layer (11) is formed by a reinforced strong film.

2. Packaging according to claim 1, **characterised in that** the two layers (11, 12) of the hood bag (cf 10) are connected together in such a manner that at least the inner layer (12) is impermeable to water and air.

3. Packaging according to claim 1 or 2, **characterised in that** for the sealing connection of the hood (10) with the base plate (2) the latter has in the upstanding edge region an encircling annular surface (16) against which the opening region (17) of the hood bag (cf 10) can be sealingly pressed (cf 18).

4. Packaging according to claim 3, **characterised in that** the annular surface (16) is equipped with a soft seal.

5. Packaging according to claim 3 or 4, **characterised in that** ring strainers (18) of known kind are provided for the sealing pressing of the opening region (17) of the hood bag (cf 10).

6. Packaging according to at least one of the preceding claims, **characterised in that** the base plate (2) has centring means (15) for the respective pressed bale (6).

7. Packaging according to at least one of the preceding claims, **characterised in that** the centring means (15) for the respective pressed bale (6) is formed by a trough in the base plate (2).

8. Packaging according to at least one of the preceding claims, **characterised in that** the base plate (2) is constructed in the manner of a pallet with feet (1).

9. Packaging according to at least one of the preceding claims, **characterised in that** the flexible hood bag (cf 10) has upper and/or lateral loops (13, 14) or the like at its reinforced strong film (11).

## Revendications

1. Emballage pour des produits agricoles coupés ou hachés et/ou des balles contenant du fourrage, en particulier pour des balles à ensiler, qui entoure de manière étanche à l'eau et à l'air la balle moulée par compression et est prévu comme emballage à plusieurs usages, ledit emballage étant constitué d'un capot pouvant être retourné sur la balle et d'une plaque de fond portant la balle et le capot pouvant être relié avec la plaque de fond de manière étanche à l'air et à l'eau puis en être séparé, le capot étant conçu à la manière d'un sac souple dont la zone d'ouverture peut être reliée à la plaque de fond aménagée en conséquence pour assurer la liaison étanche,
**caractérisé par le fait**
**que** le sac-capot (voir 10) est formé de deux couches, dont la couche intérieure (12) est constituée d'une feuille mince compatible avec des denrées alimentaires, tandis que la couche extérieure (11) est formée par une feuille résistante armée.

2. Emballage selon la revendication 1, **caractérisé par le fait que** les deux couches (11, 12) du sac-capot (voir 10) sont reliées entre elles de manière qu'au moins la couche intérieure (12) soit imperméable à l'air et à l'eau.

3. Emballage selon l'une des revendications 1 ou 2, **caractérisé par le fait que**, pour la liaison étanche entre le capot (10) et la plaque de fond (2), cette dernière présente, dans la zone de bordure relevée, une surface annulaire périphérique (16) contre laquelle la zone d'ouverture (17) du sac-capot (voir 10) peut être pressée pour assurer l'étanchéité (voir 18).

4. Emballage selon la revendication 3, **caractérisé par le fait que** la surface annulaire (16) est pourvue d'une garniture d'étanchéité souple.

5. Emballage selon l'une des revendications 3 ou 4, **caractérisé par le fait qu'**il est prévu des tendeurs annulaires (18) de type connu pour presser de manière étanche la zone d'ouverture (17) du sac-capot (voir 10).

6. Emballage selon au moins l'une quelconque des revendications précédentes, **caractérisé par le fait que** la plaque de fond (2) présente un centrage (15) pour la balle comprimée (6).

7. Emballage selon au moins l'une quelconque des revendications précédentes, **caractérisé par le fait que** le centrage (15) pour la balle concernée (6) est formé par une cuvette située dans la plaque de fond (2).

8. Emballage selon au moins l'une quelconque des revendications précédentes, **caractérisé par le fait que** la plaque de fond (2) est prévue avec des pieds (1) à la manière d'une palette.

9. Emballage selon au moins l'une quelconque des revendications précédentes, **caractérisé par le fait que** le sac-capot souple (voir 10) présente, sur sa feuille résistante armée (11), des boucles (13, 14) supérieures et/ou latérales ou similaires.
